# EUROPEAN PATENT APPLICATION

(11) **EP 1 860 901 A2**
(43) Date of publication of application: **28.11.2007**
(21) Application number: 07007624.5
(22) Date of filing: 13.04.2007
(51) Int. Cl.: H04Q 7/36

(54) **Wireless communication apparatus for controlling bandwidth of channel**

(30) Priority: 24.05.2006 JP 2006144342
(71) Applicant: Hitachi, Ltd., Chiyoda-ku Tokyo 100-8280 (JP)
(72) Inventor: Maeki, Akira, Chiyoda-ku Tokyo 100-8220 (JP); Miyazaki, Masayuki, Chiyoda-ku Tokyo 100-8220 (JP)
(74) Representative: Strehl Schübel-Hopf & Partner

(57) **Abstract**

Provided is a wireless communication apparatus for communicating by a single channel using ultra wide band impulse signals, being configured to: detect the signal transmitted by other wireless systems in a frequency band where the signal can be transmitted; determine a transmission band avoiding the band in which the signal has been detected; and control the bandwidth of the channel so that the transmission signals may be included in the determined transmission band.

## Description

### CLAIM OF PRIORITY

The present application claims priority from Japanese patent application JP 2006-144342 filed on May 24, 2006, the content of which is hereby incorporated by reference into this application.

### FIELD OF THE INVENTION

This invention relates to a wireless communication apparatus that uses string of pulse as transmission signals and in particular to a wireless communication apparatus and a wireless communication system that reduce interference with other wireless communication systems and improve the communication performance of the system.

### BACKGROUND OF THE INVENTION

The ultra wide band impulse radio (hereinafter referred to as "UWB-IR") communication system uses pulse signals for communication. Moe Z. Win et al.: "Impulse radio: how it works", IEEE Communications Letters, Volume 2 No. 1, January 1998 discloses a communication system wherein Gaussian mono-pulse is modulated by the PPM (Pulse Position Modulation) method. Unlike signal transmission methods using ordinary continuous wave, these communication methods using string of pulse transmits information by transmitting and receiving intermittent energy signals. When the pulse width of pulses constituting such string of pulse is very narrow, the frequency band of their signal spectrum is wider than that of communications using the ordinary continuous wave, and the energy of signals is spread over a wide band.

As a result, the signal energy per unit frequency is reduced to a very small level and communication is made possible with little interference with other communication systems. Therefore, a frequency can be shared with a plurality of systems. This ultra wide band (UWB) communication system is approved by the U.S. Federal Communications Commission (FCC) to operate over a frequency band of 3.1 GHz to 10.6 GHz with a very low transmission power of -41.3 dBm/MHz. Also, in Japan and other countries, this system is likely to be approved as a wide band low power communication system.

As the primary modulation methods of such UWB-IR communication, there are BPSK (Binary Phase Shift Keying), PPM modulation wherein the horal position of the pulse to be transmitted is shifted in time. And code spreading is widely used as the secondary modulation, and a block of transmission data is expressed by a plurality of string of pulse by means of code spreading.

We will then describe a BPSK modulation type UWB-IR transmission apparatus using the conventional direct spreading. Such a direct spreading type UWB-IR transmission apparatus is disclosed in details for example in JP 2002-335189 A. And a PPM modulation type UWB transmission apparatus is disclosed in details in JP 1998-508725 A.

### SUMMARY OF THE INVENTION

The BPSK modulation type UWB-IR transmission apparatus using the conventional direct spreading has the following configuration.

The information source outputs information into a multiplier as transmission data. The spread code generating unit outputs PN (pseudo random noise) series and other spread code series to the multiplier. Spread code series outputted by the spread code generating unit are generated at a higher speed rate than the rate at which the information source generates transmission data.

The multiplier creates spread data trains by spreading transmission data by multiplying the transmission data generated by the information source by the spread code series generated by the spread code generating unit. The spread data series generated are inputted into the pulse generating unit.

The pulse generating unit generates transmission string of pulse corresponding to the spread data trains outputted by the multiplier. At this time, in response to the value of the spread data trains, the polarity of pulses constituting the outputted string of pulse is inverted. The string of pulse generated by the pulse generating unit is converted into transmission signals after radio frequency signal processing such as frequency conversion, amplification and band restriction and the like by the RF front-end unit. The RF front-end unit includes, for example, a power amplifier, local oscillator and a mixer.

And the converted radio frequency signals are transmitted from the antenna.

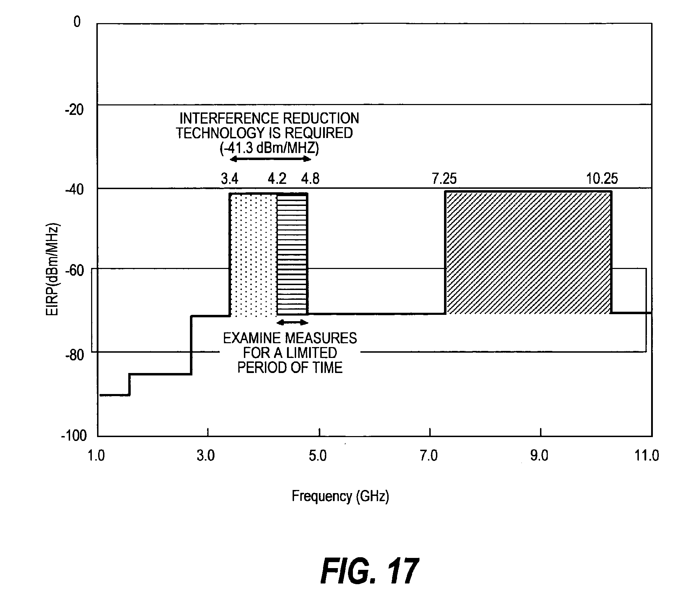

FCC of the United States approved the use of the UWB-IR and other UWB wireless communication systems described above and triggered the allocation of frequencies for UWB in various other countries. The proposed approval of UWB spectrum now being discussed in Japan is shown in Fig. 17. EIRP (Effective Isotropic Radiated Power) shown by the vertical axis of the graph in Fig. 17 represents the power concentration for transmission including antenna gain. EIPR shows electric power per unit frequency width inputted into the isotropic antenna with gain of OdBi(e. g., -41.3 dBm/MHz).

In Japan, as a result of technical examinations by the Information Communication Deliberative Council on the use of UWB, there is a move for approving EIRP of -41.3 dBm/MHz representing the same output power as that of the FCC of in the band of 3.4 GHz to 4.8 GHz and 7.25 GHz to 10.25 GHz as a proposed regulatory rule. However, in the band of 3.4 GHz to 4.8 GHz wherein interferences with other existing wireless communication systems are concerned, the implementation of an interference mitigation technique (e. g., DAA: "Detect And Avoid") will be required.

Here, the term DAA represent a function of detecting signals received in the band where signals are to be transmitted before the UWB device transmits signals and restricting the band chosen for transmitting signals if necessary in order to avoid any interferences that may be caused to other systems. This assures that the UWB device does not affect the existing wireless communication systems operating in the same band.

Incidentally, in the band of 4.2 GHz to 4.8 GHz, no interference mitigation technique is required to be implemented as a temporary measure until the end of December 2008. Such allocation of frequency band and power regulation are proposed regulatory rules elaborated by taking into account the possible interference with other systems, and are highly likely to be adopted as legal regulatory rules.

We will then explain on the UWB system to be implemented with the background of the legal regulation described above. For the frequency band used by the UWB system, the use of a frequency band below 5 GHz or not is desirable taking into account the mounting of the UWB system and the reduction of propagation loss. As described above, under the present legal regulation, an interference mitigation technique must be implemented in any UWB systems using a low frequency band. This interference mitigation technique has a problem in that it restricts seriously communication if the algorithm of the interference mitigation technique is inappropriate and the interference mitigation technique is implemented in an inappropriate manner.

In the face of this problem, one of the interference avoiding technologies now widely used is "carrier sense" used by wireless LANs, IEEE 802.11 and the like. Carrier sense or CSMA/CA (Carrier Sense Multiple Access with Collision Avoidance) is an algorithm designed to avoid any collision between packets, and is widely used as a multiplexing system. The CSMA is an algorithm wherein each radio communication apparatus ready to transmit signals (packets) confirms the status of use of the radio channel before transmitting signals and refrains from transmitting the signals when the transmission of signals by another radio communication apparatus is confirmed.

For example, under the IEEE 802.11a standard, (1) the detection of the preamble of IEEE 802.11 a means that a wireless LAN system has been detected, no signal shall be transmitted from the owner's station. (2) When the preamble of IEEE 802.11a has not been detected and if a signal with a received power of -62 dBm has been detected, this frequency may be used by another system, no signal shall be transmitted from the owner's station. With such an algorithm, the transmission timing is controlled.

Unlike the UWB system wherein a wide band of several GHz is used, under the IEEE 802.11 system, not much signals from other systems get mixed into the band, and the mounting of a similar algorithm in the own system completes the system. On the contrary, if an interference wave from a system without an interference avoiding algorithm always remains in the band, no timing is available for transmitting signals from this system, and the communication efficiency of the system deteriorates sharply.

From the viewpoint of avoiding bands, as the IEEE 802.11 system has a plurality of previously set fixed channels, channels can be switched. However, the channel used by the base station serving as the basic point of a wireless network is set manually in advance for each base station. In addition, once the channel has been set, the channel is not changed dynamically.

Under the IEEE 802.11 system, channels each with a fixed bandwidth of approximately 20 MHz are switched. Therefore, even if an algorithm for switching channels is implemented on the base station, the transmission system and the receiving system control only local oscillators and/or channel filters with a fixed value of several tens of MHz.

On the other hand, the UWB-IR system communicates by using a freely chosen bandwidth above 500 MHz. And as the transmission power is regulated per unit frequency, according to the legal regulation, the transmission power can be made greater as the bandwidth of the radio signals gets wider and accordingly a higher communication performance can be expected.

Furthermore, as wide band signals on the frequency axis are signals with a short pulse width on the time axis, the wider the bandwidth of the signals gets, the precision of position detection improves. However, a wide band system on the frequency axis is confronted with limitations in that it is difficult for such system to co-exist with other systems, the number of available channels is limited and the specifications for analog circuits get harsher.

In this way, according to the UWB-IR system, it is possible to vary flexibly the bandwidth of the signal used depending on the system specification. In other words, a transmitter and a receiver corresponding to the bandwidth of the signal used as well as the control algorithm for these are necessary.

Accordingly, the object of this invention is to provide a system adapted to the legal regulation and capable of realizing the optimum communication in an environment where interference is expected.

A representative aspect of this invention is as follows. That is, there is provided a wireless communication apparatus for communicating by a single channel using ultra wide band impulse signals, being configured to: detect the signal transmitted by other radio systems in a frequency band where the signal can be transmitted; determine a transmission band avoiding the band in which the signal has been detected; and control the bandwidth of the channel so that the transmission signals may be included in the determined transmission band.

According to this invention, it is possible to reduce interference to other systems.

### BRIEF DESCRIPTION OF THE DRAWINGS

The present invention can be appreciated by the description which follows in conjunction with the following figures, wherein:
Fig. 1 is a drawing showing a concept of eliminating interference described in this invention;
Fig. 2 is a block diagram showing a rough configuration of a wireless communication apparatus according to a first embodiment of this invention;
Fig. 3 is a block diagram showing a detailed configuration of the wireless communication apparatus according to the first embodiment of this invention;
Fig. 4 is a block diagram showing a a transmitting unit of the wireless communication apparatus according to the first embodiment of this invention;
Fig. 5 is a spectrum diagram showing transmitting signal transmitted from the wireless communication apparatus according to the first embodiment of this invention;
Fig. 6 is a flow chart showing an operation of the wireless communication apparatus according to the first embodiment of this invention;
Fig. 7 is a drawing which shows a signal waveform detected by the wireless communication apparatus according to the first embodiment of this invention;
Fig. 8 is a drawing which shows dynamically changing a transmittable frequency band by the wireless communication apparatus according to the first embodiment of this invention;
Fig. 9 is a flow chart showing a variation of a processing executed by the wireless communication apparatus according to the first embodiment of this invention;
Fig. 10 is a flow chart showing a variation of a processing executed by the wireless communication apparatus according to the first embodiment of this invention;
Fig. 11 is a flow chart showing a detailed processing of setting transmission mode according to the first embodiment of this invention;
Fig. 12 is a block diagram showing a configuration of a detecting unit of a wireless communication apparatus according to the second embodiment of this invention;
Fig. 13 is a block diagram showing a detailed configuration of the wireless communication apparatus according to the third embodiment of this invention;
Fig. 14 is a block diagram showing a detailed configuration of the wireless communication apparatus according to the fourth embodiment of this invention;
Fig. 15 is a block diagram showing a configuration of a wireless communication system according to a fifth embodiment of this invention;
Fig. 16 is a flow chart showing an operation of the wireless communication system according to a fifth embodiment of this invention; and
Fig. 17 is a drawing which shows the proposed approval of UWB spectrum in Japan.

### DETAILED DESCRIPTION OF THE PREFERRED EMBODIMENTS

The embodiments of this invention will be described below with reference to drawings. It should be noted, however, that the embodiments described below are merely examples of embodying this invention. The methods of embodying this invention are not limited to the contents disclosed in the present specification.

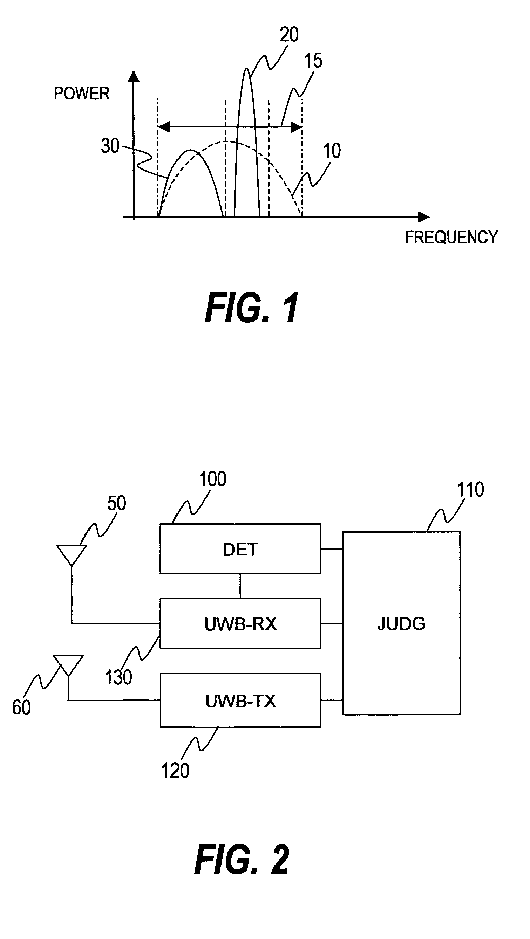

Fig. 1 is a descriptive illustration of the concept of eliminating interference described in this invention.

As shown in Fig. 1, according to this invention, radio signals 20 that should be avoided are present in the UWB signals 10 (with a bandwidth of 15) that wireless communication apparatuses based on the UWB-IR system can transmit. And Fig. 1 illustrates the UWB signal 30 transmitted by applying this invention. In this way, the application of this invention enables to transmit the UWB signals 30 that adequately avoids any interference wave 20.

### (First Embodiment)

Fig. 2 is a block diagram showing the rough configuration of the wireless communication apparatus according to the First Embodiment.

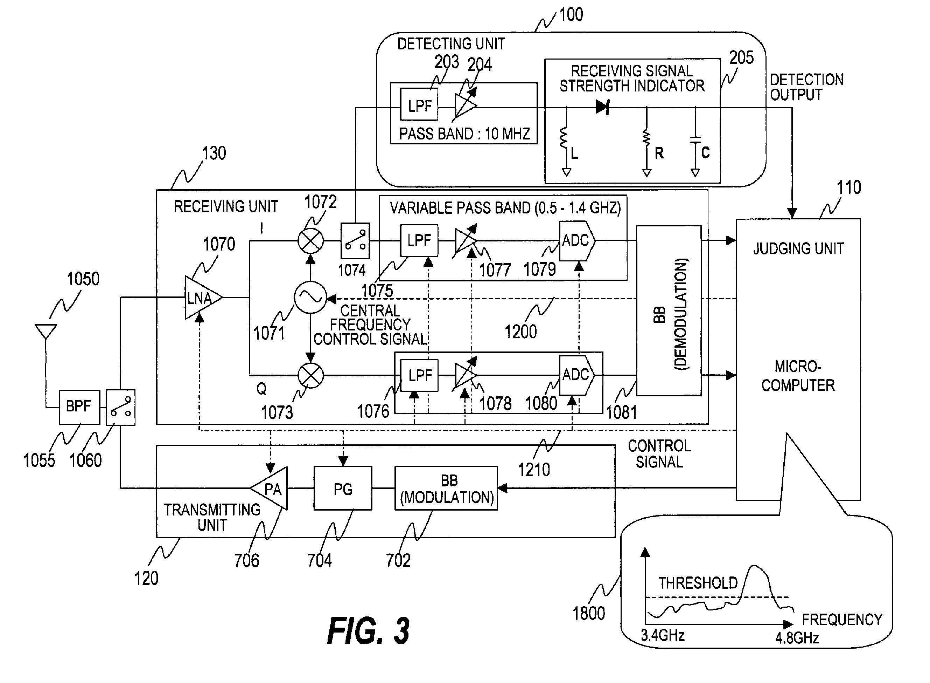

The wireless communication apparatus described in the First Embodiment includes a receiving antenna 50, a transmitting antenna 60, a detecting unit (DET) 100, a judging unit (JUDG) 110, a transmitting unit (UWB-TX) 120 and a receiving unit (UWB-RX) 130. Incidentally, the transmitting antenna 50 and the receiving antenna 60 may share a single antenna as described further below (refer to Fig. 3).

In response to any request for transmission, the detecting unit 100 detects the signals of the wireless communication system in the desired transmission band to avoid any interference with other wireless communication systems. The judging unit 110 compares the level of received signals detected by the detecting unit 100 and the threshold value set in advance to judge whether the signals whose transmission has been requested should be transmitted. The transmitting unit 120 generates radio signals limited to the desired radio band. The transmitting unit 130 receives the UWB signals transmitted from other wireless communication apparatuses to demodulate the data. The demodulation system that depends on the modulation system is realized with a similar configuration as that of ordinary receiver.

In response to any request for transmission, the detecting unit 100 detects any signals detectable in the desired transmission band (for example band 15) to avoid any interference with other wireless communication systems. The level of the detected radio signals is inputted into the judging unit 110 as a function of frequency. Based on the criteria of judgment described further below, the judging unit 110 compares the inputted signal level information with the threshold value set in advance to judge whether the signal should be transmitted or not. In other words, the judgment of the judging unit 110 determines whether the signal should be transmitted or not.

If the signal is not to be transmitted, the transmission process is terminated, and the system prepares for the subsequent request for transmission. For example, if the signal that has been transmitted from another system and received is greater than the level set by the legal regulation and the like and the band of the detected signal is avoided, and as a result if this system cannot transmit the signal, the signal is not transmitted.

On the other hand, if the signal is to be transmitted, the judging unit 110 sets the transmission method (center frequency, bandwidth, pulse waveform, modulation, pulse repetition frequency (PRF) and the like) and transmits the transmission method information to the transmitting unit 120. Based on the information received from the judging unit 110, the transmitting unit 120 generates transmission signals 30, outputs the signals into the space through the antenna 130 and ends the transmission process.

What is important here is the judgment criteria of the judging unit 110 and the transmission method, which will be described below respectively.

An example of detailed configuration of the wireless communication apparatus according to the first embodiment will be described below with reference to the block diagram shown in Fig. 3.

The wireless communication apparatus described in the first embodiment comprises a detecting unit 100, a judging unit 110, a transmitting unit 120, a receiving unit 130, an antenna 1050, a band pass filter (BPF) 1055 and an antenna switch 1060.

The detecting unit 100 includes a low pass filter (LPF) 203, a variable gain amplifier 204 and a received signal strength indicator (RSSI) 205. Incidentally, the configuration of the detecting unit 100 is not limited to the one shown in the figure. As described above, in response to any request for transmission, the detecting unit 100 detects the signals of wireless communication systems in the desired transmission band (in the bandwidth 15 of the UWB signals 10 that can be transmitted by wireless communication apparatuses) to avoid any interference with other wireless communication systems.

The signals inputted into the detecting unit 100 are filtered by the low pass filter 203 and signals in the band of approximately 10 MHz are extracted. And the filtered signals are amplified to a desired level by the variable gain amplifier 204.

The amplified signals are inputted into the received signal strength indicator 205. The received signal strength indicator 205 includes half wave rectification circuits wherein diodes are used and outputs DC signals of a level corresponding to the strength of the received field. As for the configuration of the received signal strength indicator 205, various known technologies can be applied.

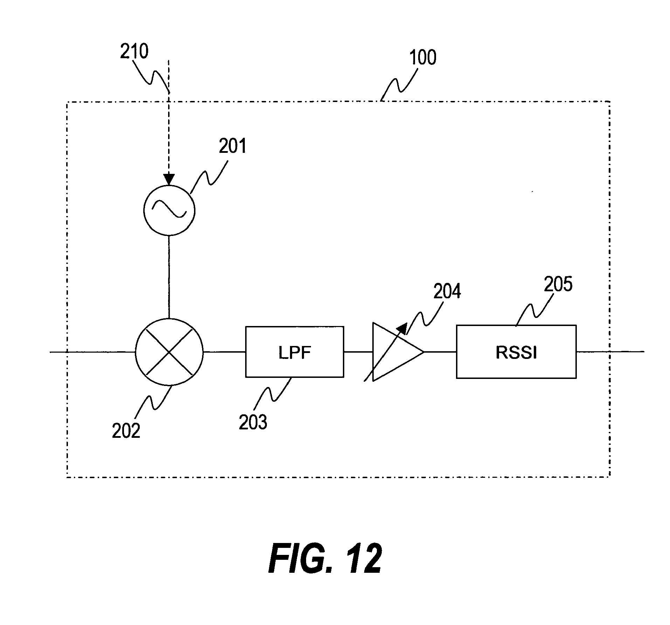

Another example of configuration of the received signal strength indicator 205 is shown in the second embodiment (Fig. 12). And the received signal strength indicator 205 may be a full wave rectification detection circuit using an operating amplifier.

For the signal detection algorithm of this detecting unit 100, the following algorithm may be applied.
(1) Detect only the signals received in the band in which outputs are scheduled.
(2) Detect all the interference avoiding waves in the band in which the wireless communication apparatus can output. This will enable to expand the transmission band to the maximum.
(3) Detect signals based on the band of the interference avoiding system and the power calculated in the band. This will enable to simplify the frequency and procedure of detection and to detect signals. This method is effective if the interference avoiding system is known.

The judging unit 110 includes a microcomputer and controls the operation of each operating unit of the wireless communication apparatus. The microcomputer includes a processor, a ROM and a RAM.

The ROM stores programs executed by the processor. According to the present embodiment, the ROM stores the program that provides a judging algorithm of transmission methods and the parameters required by the judging algorithm. The processor executes the programs stored in the ROM. The RAM provides a work area for the execution of programs by the processor.

The criteria of judgment of the transmission method in the judging unit 110 include (1) legal regulation, (2) standardization requirement, (3) system performance, (4) performance of transmitter and receiver, (5) necessity of communication and the like.

With regard to (1) the legal regulation, as described above, when it is judged that the output of wireless communication apparatuses must be regulated by legal provisions, the output of radio signals will be regulated in accordance with legal regulations.

With regard to (2) the standardization regulation, for example, if the wireless communication apparatus is a system based on the IEEE 802.15.4a which is a US wireless PAN (Personal Area Network) standard, radio signals will be transmitted according to the band and the modulation based on the standardization requirement.

With regard to (3) the system performance, for example, if a high precision positioning is required for nodes, the wider the band of the signal is on the frequency axis, the narrower each pulse gets on the time axis. Therefore, when signals cannot be transmitted by a desired bandwidth, the best effort type signals will be transmitted meaning that signals will be transmitted by the widest band possible while avoiding interference. Or, signals will be transmitted in another band in which there is no restriction of transmission (in Japan, 7.25 GHz to 10.25 GHz).

And, if a UWB system is the positioning system, the precision of the positioning result can be improved to a value close to the desired precision by staggering the transmission timing so as to allow the transmitter to send the desired bandwidth, by positioning a number of times and the like.

In addition, as the wider the transmission frequency width expands the stronger the output power gets, the transmission method can be judged from the viewpoint of communication performance. For example, interference can be avoided by using a plurality of channels at the same time. In this case, however, a receiving system must be provided for each channel and this result in a larger circuit scale and increased power consumption.

In particular, since the UWB wireless communication system according to this invention has a bandwidth of 500 MHz or more, interference can be easily avoided by creating a plurality of 10 MHz channels (e. g., 100 channels). However, the provision of transmitting/receiving systems for 100 channels is not realistic.

Moreover, regarding the precision of distance measurement and the precision of positioning, in the case of transmitting signals by a plurality of channels of a narrow bandwidth, the precision of distance measurement and that of positioning based on transmission pulse width fall sharply as compared with the case of transmitting signals by a single wide band channel.

With regard to (4) the characteristics of the transmitter and receiver, when the configuration of the transmitter and the receiver is restricted (e. g., in the case where the transmitter can generate transmission signals only in a band of 4.2 GHz to 4.8 GHz among the available frequency band of UWB (3.4 GHz to 4.8 GHz), if signals transmitted from other wireless communication systems are present in the band, the transmitter cannot transmit UWB signals in the band.

And even if the transmitter can transmit signals of all the frequencies of the available frequency bands, if the receiver can receive only signals in some of the frequency bands (e. g., 3.4 GHz to 4.0 GHz), the signals transmitted in the band of 4.2 GHz to 4.8 GHz cannot be received. In such a case, the performance of the receiver on the receiving side will be the criteria of judgment. It would be advantageous to make an arrangement in advance to provide each wireless communication apparatus (terminal and base station) with the performance information of these transmitters and receivers.

With regard to (5) the necessity of communication, the issue is a case that can be found in the sensor net system and the like. For example, in the temperature monitoring system and the like wherein measurement data are transmitted every five minutes, it is not always necessary to transmit data every five minutes, and in a situation where interference is concerned, the data to be transmitted are stored in the memory of a transmission node, and such data may be transmitted together with the previous data at the time of the subsequent transmission.

As for other methods (6), the transmission method can be judged based on the communication performance required by the wireless communication apparatus on the transmitting side and the communication performance required by the wireless communication apparatus on the receiving side (number of retransmissions, bit error ratio, and the like), type of transmission packet (data or acknowledgement and the like), and the contents of data to be transmitted.

Or, narrow band signals may be transmitted if the amount of transmission data exceeds the storage capacity allowed by the memory by the application of such an algorithm. Or, signals may be transmitted in the band originally set by changing the value set as the threshold value for judgment. At this time, the transmission power is reduced to reduce any interference that may be exerted to other wireless communication systems and the decrease in the transmission power is compensated by powerful error correction in the data.

As described above, in response to the configuration of the transmitter and the receiver and the requirements of application from the viewpoint of system, various algorithms may be implemented. The judging unit 110 can judge by storing the various judging methods and criteria of judgment mentioned above in advance in the storage medium of the wireless communication apparatus.

The transmitting unit 120 includes a base band unit (modulation) 702, a radio frequency pulse generator (PG) 704 and a power amplifier (PA) 706. The configuration of the transmitting unit 120 includes a phase locked loop, a mixer and the like that generates pulses by an analog circuits, a direct digital synthesizer and the like that uses a digital circuit operating at a high speed and the like, and there are a variety of methods for limiting the band of this invention and that of setting the center frequency.

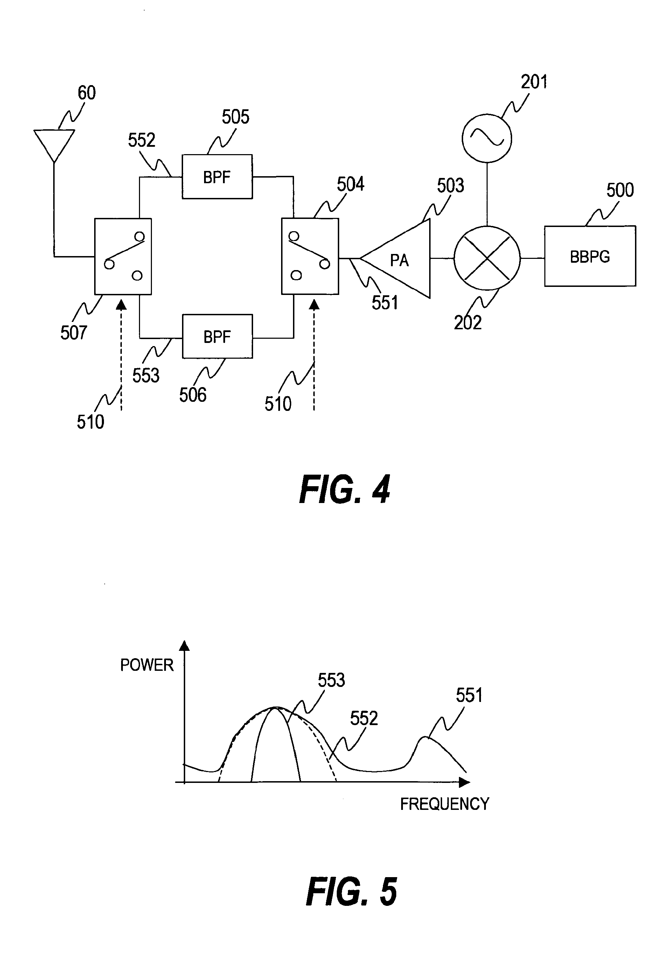

We will now describe the transmitting unit of the wireless communication apparatus according to the first embodiment with reference to the block diagram shown in Fig. 4.

The transmitting unit 120 includes a base band pulse generator (BBPG) 500, a local oscillator 201, a mixer 202, a power amplifier (PA) 503, switches 504 and 507, and band pass filters 505 and 506 that allow fixed band signals to pass.

The base band pulse generating unit 500 generates pulse signals in the base band (e. g., Gaussian pulse having a bandwidth of 1.4 GHz). Then, the mixer 202 mixes the pulse signal of the base band with the radio frequency carrier signal outputted by the local oscillator 201 and converts the frequency of the base band signal to a desired radio frequency band. The power amplifier 503, amplifies the pulse signals thus converted to a radio frequency band (radio frequency pulse signal) to a desired level. The amplified radio frequency pulse signal is inputted into the switch 504.

The switches 504 and 507 operate being interlinked with the control signals 510 received from the judging unit 110 and switch the band pass filters 505 and 506 connecting the output of the power amplifier 503 and the transmission antenna 60. For example, the filter 505 is a band pass filter whose center frequency is the same as the output frequency of the oscillator and having a bandwidth of 1.4 GHz and is used mainly for the elimination of spurious. The filter 506 is a band pass filter whose center frequency is the same as the output frequency of the transmitter and allows signals of a bandwidth of 0.5 GHz to pass through. The control signal 510 outputted from the judging unit is a signal to be connected with the filter for realizing the desired bandwidth.

For example, to transmit a signal with a bandwidth of 0.5 GHz, the output of the power amplifier 503 is connected with the filter 506. The filter 506 limits the band of the 1.4 GHz wide bandwidth signals 551 outputted from the power amplifier to that of the 0.5 GHz band signal. The radio frequency pulse signal 553 whose band has been limited (see Fig. 5) is irradiated into the space from the antenna 60 through the switch 507.

Incidentally, the radio frequency pulse signals 552 shown in Fig. 5 represent signals after the passage of the output 551 of the power amplifier 503 through the wide band filter 505.

By the control described above, the band of the signals can be limited to a desired bandwidth and their interference to other systems can be reduced. And the band limitation method shown in the present embodiment makes it difficult to limit the band of signals to a desired band in data duplication methods for each frequency of the sub-carrier by a multi-carrier such as OFDM and the like because data are lost due to the band restriction. In other words, the present embodiment is a mode that can be carried out by the UWB-IR system.

And although the present embodiment showed a configuration based on two types of filter each having a separate fixed bandwidth, it is possible to change dynamically the characteristics of bandwidth by adopting a single adaptive filter or a plurality of them. In the case where a single adaptive filter is used for its configuration, the switches 504 and 507 are no longer required, and the control signals 510 outputted by the judging unit are directly inputted into the adaptive filter.

Moreover, a desired band limiting system may be implemented by combining a plurality of band pass filters, low pass filters and band elimination filters having different center frequency or bandwidth or combining them with the frequency characteristics of the antenna.

The transmission waveforms 30 outputted from the antenna 60 are selected by the configuration of the above-mentioned transmitting unit or the configuration of the transmitting unit of the embodiment described further below. In other words, predominant signals from the viewpoint of the system are selected from among the signals outputted by the antenna 60 according to the criteria of judgment described above. An example thereof is the selection of signals 30 to be transmitted of the widest possible band among the signals whose interference to other systems may be reduced sufficiently in the band 20 in which interference should be avoided as shown in Fig. 1. The method of selecting the bandwidth, frequency and the like depend on the circuit configuration and the system specification of the transmitting unit 120. Furthermore, it is necessary to take into account the margin and the like of the circuit and system.

The receiving unit 130 includes a low noise amplifier (LNA) 1070, a local oscillator 1071, mixers 1072 and 1073, a switch 1074, low pass filters (LPF) 1075 and 1076, variable gain amplifiers 1077 and 1078, an analog to digital converters (ADC) 1079 and 1080, and a base band unit (demodulation) 1081.

The antenna 1050 receives the UWB signals (desired signals) of this wireless communication system and the radio signals (interference signals) of other wireless communication systems. Then, the radio signals received by the antenna 1050 are subjected to the filtration of unwanted signals by the band pass filter 1055. Then the filtered radio signals are inputted into the receiving unit 130 through an antenna switch 1060. Incidentally, a circulator or a duplexer may be used in the place of the antenna switch.

The receiving unit 130 inputs the signals inputted from the antenna switch 1060 into the low noise amplifier 1070, which amplifies the signals to a desired level. Then, the mixers 1072 and 1073 mix the signals received with the output of the local oscillator, and convert the frequency of the received signals directly into that of the base band signals. The base band unit 1081 proceeds to a quadrature detection of I/Q signals of the base band whose frequency has been converted to demodulate the data.

We will then describe the operation of each of the units described above.

At the time of data transmission, when the detecting unit 100 completes the detection process described above, the judging unit 110 judges the frequency band that the judging unit 110 should transmit and transmits band control signals 1210 to the radio frequency pulse generator 704. By this process, the frequency and the bandwidth of the signals transmitted from a wireless communication apparatus are controlled. For example, sensor data (e. g., temperature and/or humidity) are inputted into the base band unit 702, spread and demodulated in the base band unit 702. Then, the radio frequency generator 704 generates radio frequency pulse signals whose band is limited. The generated pulse signals are amplified to a desired power level by the power amplifier 706 and are irradiated into the space after passing through the antenna switch 1060, the band pass filter 1050 and the antenna 1050.

At this time, depending on the system, the judging unit 110 may change the setting of the receiving unit 130 by the action of the center frequency control signal 1200 and the bandwidth control signal 1210 in order to receive efficiently signals in the transmission frequency band.

After the transmission of sensor data, the wireless communication apparatus of the communication partner (e. g., base station and the like) sends back an acknowledgment signal (ACK signal). It is highly probable that the ACK signals transmitted from other wireless communication apparatuses have the frequency and bandwidth of signals outputted by the transmitting unit 120. Therefore, the transmitting unit 130 can receive efficiently signals by remaining on standby in the frequency and the bandwidth of the transmission signal in advance.

In other words, the ACK signals received are inputted from the antenna 1050, and after passing through the band pass filter 1055, the antenna switch 1060, the low noise amplifier 107 and the I/Q mixers 1072 and 1073, the low pass filters 1075 and 1076, the variable gain amplifiers 1077 and 1078, and the analog to digital converters 1079 and 1080, are demodulated at the base band unit 1081.

The demodulated data are processed so that the contents of the data may be judged. And after a retransmission process if necessary, the transmitting unit 120, the receiving unit 130 and the like are shifted to the specified state (e. g., standby mode). Incidentally, after the transmission of the signal, the wireless communication apparatus is reset in the receiving mode, and the switch 1074 is connected with the receiving side (low pass filter 1075 side).

If it is necessary to detect the signals transmitted by this system and other systems before the transmission of the signals and the like, the switch 1074 is connected with the detecting unit 100 side to operate the detecting unit 100. And the detecting unit 100 detects the signals receivable within the desired transmission band and sends the level of the detected radio signals to the judging unit 110. It is possible to change the frequency of the signals detected by the detecting unit 100 by sending the center frequency control signal 1200 from the judging unit 110 to the local oscillator 1071.

It is possible to show the distribution of power 1800 inputted from the antenna 1050 by the frequency axis from the output frequency of the transmitter 1071 by the center frequency control signal 1200 and the voltage value outputted from the detecting unit 100. Incidentally, the threshold value indicating the power level serving as the reference for judgment should be set in advance based on the performance of the receiving unit 130 and that of the detecting unit 100.

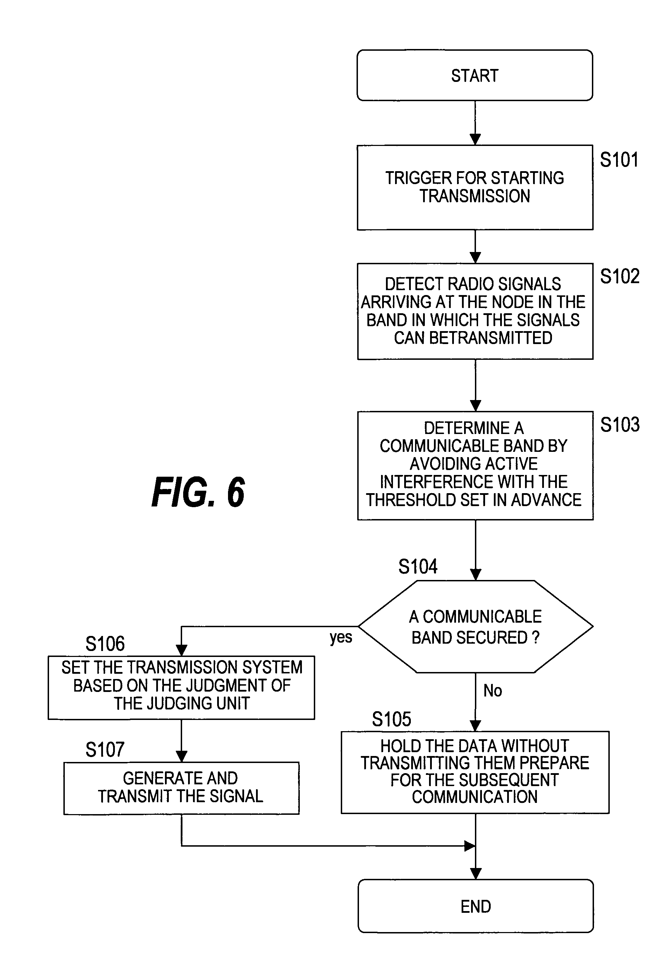

We will then describe the operation of the wireless communication apparatus according to the first embodiment with reference to the flowchart shown in Fig. 6.

To begin with, the judging unit 110, at the outset of its transmission operation, pulls the trigger on various units of the wireless communication apparatus (S101). For example, a signal from a timer set to generate at a certain interval can be the trigger.

Then the detecting unit 100 detects the incoming radio signals in the band in which the wireless communication apparatus can transmit. At this time, it monitors the radio signal by measuring a number of continuous or discrete points in the band in which the wireless communication apparatus can transmit signals (S102).

Then, the judging unit 110[i1] judges the band in which signals can be transmitted without this system causing interference with other systems by comparing the same with the threshold value set in advance. And as a result of comparison between the judged transmittable band and the bandwidth in which the recipient base station can receive the signals, the judging unit 110[i2] determines the band in which both of them overlap as "the band available for communications while avoiding any active interferences" (S 103).

Then, the judging unit 110 judges whether it is possible to secure the bandwidth required for communication within the specified "band available for communication while avoiding any active interference" or not (S104). For example, as the UWB system according to the present embodiment requires a bandwidth of 500 MHz or above, the judging unit 110 confirms whether a bandwidth of 500 MHz or above can be secured in "the band available for communication while avoiding any active interference."

If the necessary band cannot be secured as a result of the determination, the wireless communication apparatus refrains from transmitting the data, and stores the data to be transmitted in the memory (e. g., temperature data obtained by measuring with a sensor) to transmit at the following transmission timing (S105) and completes the processing.

On the other hand, if the necessary band can be secured as a result of judgment in S104, center frequency, bandwidth, modulation method, and pulse repetition frequency (PRF) are set based on the judgment of the judging unit 110 (S106). Then, the transmitting unit 120 generates the desired signal based on the set information, transmits the generated signals from the antenna 60 (S 107) and completes the processing.

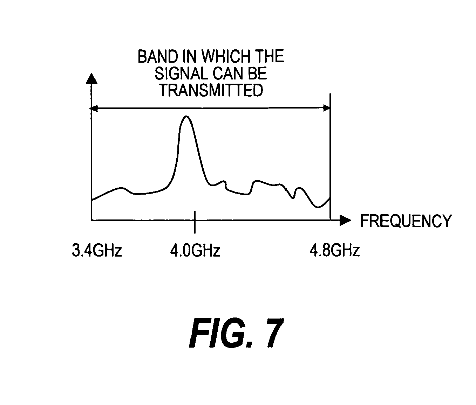

Fig. 7 is a drawing which shows the signal waveform detected by the detecting unit 100 of the wireless communication apparatus according to the first embodiment of this invention.

Let us consider for example the case wherein the frequency band available for transmission by this wireless communication system is 3.4 GHz to 4.8 GHz, and in the step S102 the detecting unit 100 has detected strong signals in the neighborhood of 4.0 GHz.

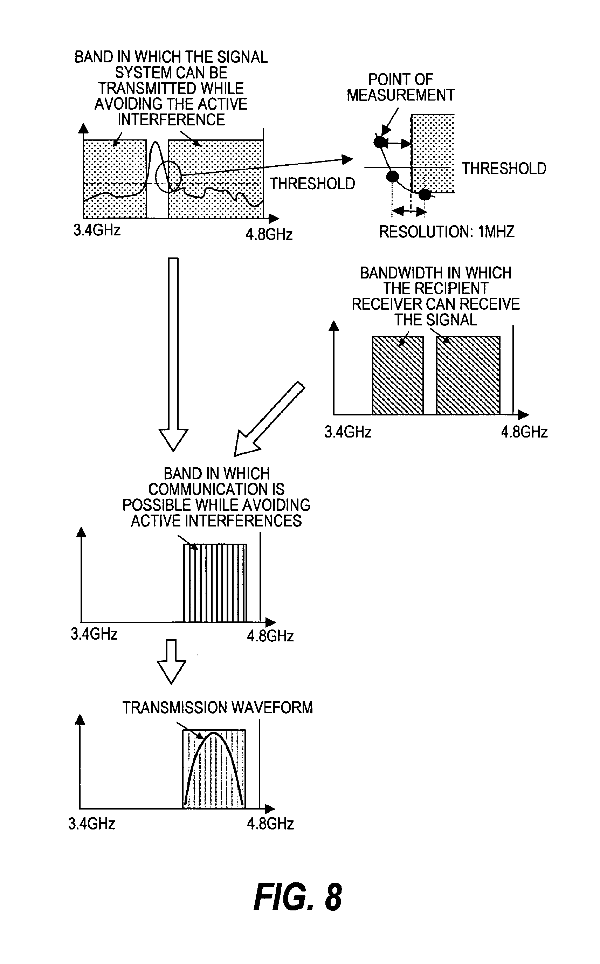

Fig. 8 is a drawing which shows how the wireless communication apparatus changes dynamically the transmittable frequency band when the signals shown in Fig. 7 have been detected.

For example, in a wireless communication apparatus wherein the detecting unit 100 detects signals by a resolution width of 1 MHz, a frequency band in which this system can transmit signals is reconstituted so that signals transmitted by other systems detected in the vicinity of 4.0 GHz may be avoided by securing a resolution margin of 1 MHz in the face of frequencies exceeding the set threshold value (or same as the threshold value). Then, this system sets "a band available for communication while avoiding any active interference" by comparing the band with frequency band in which the recipient receiver can receive data. And the transmitter 120 generates transmission waveforms within the frequency band and transmits the same through the antenna 60.

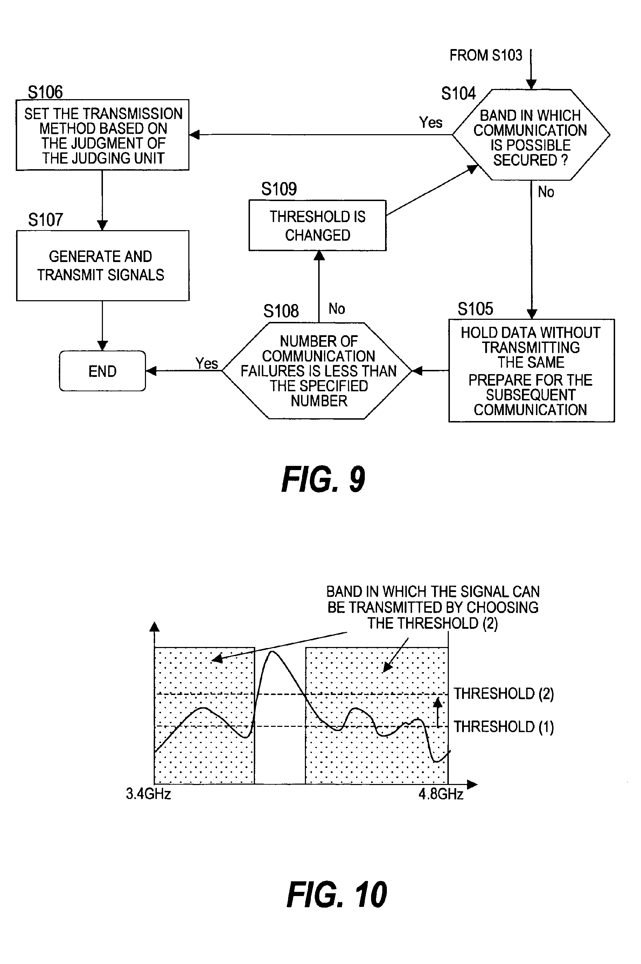

We will then describe variations of the process shown in Fig. 6 with reference to Fig. 9 and Fig. 10.

According to the flowchart shown in Fig. 6, when there is no frequency band available for transmission while satisfying the threshold value set in advance therein, the data for transmission are stored until the following transmission timing and are transmitted at the following transmission timing together with the following data. If interference signals from other systems are constantly detected, and the transmission of signals from this wireless communication apparatus have been obstructed for a specified number of times, it is possible to secure the transmission band for the signals of this wireless communication apparatus by varying the threshold value used in the judgment of the band available for transmission by adopting measures such as the reduction of output power.

This variation can be realized by replacing the step S104 of the flowchart shown in Fig. 6 and the steps subsequent thereto by the steps shown in Fig. 9.

In this variation, in the step S104, the band required for communication cannot be secured, and the data for transmission are stored in the memory (S105). Then, the number of failures to communicate and the prescribed threshold value (number of times) are compared (S108) by referring the number of data stored in the memory.

If, as a result of such comparison, the number of failures to communicate is below the prescribed threshold value, the process is terminated. On the other hand, if the number of failures to communicate exceeds the prescribed threshold value, the threshold value is changed (S109) and the process returns to the step S104.

Regarding this change of threshold value, as shown in Fig. 10, the bandwidth available for the transmission of data is expanded by shifting from a low threshold value (1) to a high threshold value (2). Therefore, after a feedback to the step S104, the possibility of advancing to the step S106 grows stronger. On that occasion, it is possible to reduce interferences to other systems by reducing the output power in the step S106 in order to reduce interferences to other systems. To reduce output power, it is possible to perform such a control by storing in advance a table in which threshold values, output power and the gains of power amplifiers of the transmitter are registered.

For example, in the case where a change is desired from the threshold value (1) to the threshold value (2), it is possible to realize the change by changing the setting specifying the gain of the power amplifier 706 by the control signal 1210 shown in Fig.3. As this step enables this system to communicate even if interferences from other systems are constantly detected, it is possible to operate efficiently the system.

If there are a number of bands available for transmission of signals by this system while avoiding any interference, the band for transmission in response to the requirement of the system is selected. For example, (1) transmit in the same condition as the previous transmission mode, (2) transmit in the lowest frequency band among the available bands, (3) transmit in the band of the widest bandwidth among the available bands, (4) transmit in the narrowest bandwidth among the bands in which the desired communication performance or positioning performance can be obtained, and the like. As the center frequency, bandwidth, power consumption, communication performance or positioning performance, and ease to use of the system are mutually interrelated for the signal to be transmitted, it is preferable to choose the optimum method according to its application and environment among various transmission modes described above.

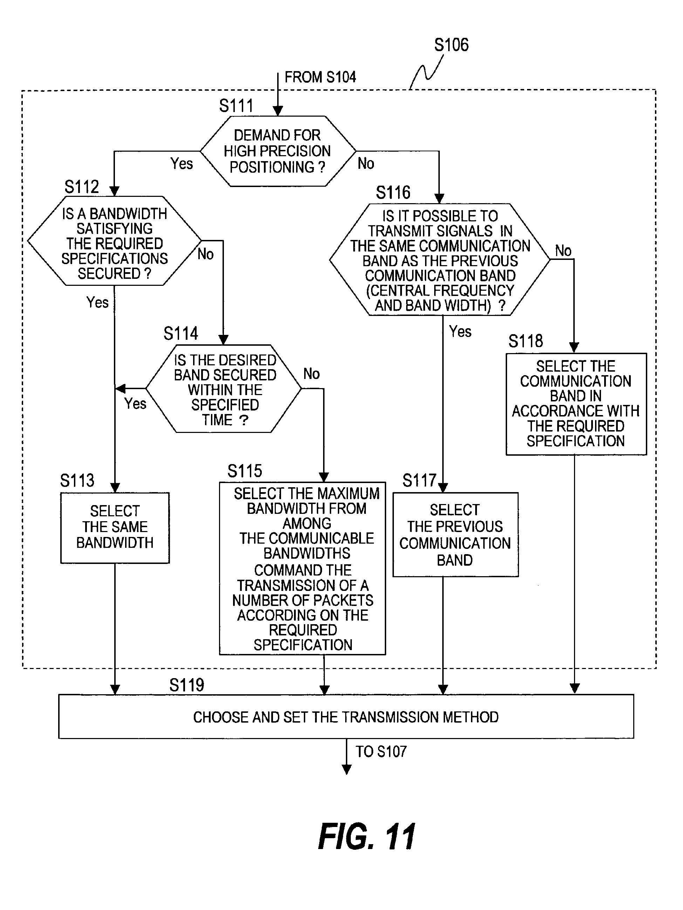

We will describe the specific examples of transmission mode with reference to Fig. 11. Fig. 11 shows the detailed steps of the step S 106 in the flowchart shown in Fig. 6.

To begin with, the question of whether high precision positioning is necessary or not is judged (S111). And if the high precision positioning is necessary, the process proceeds to the step S112. On the other hand, if the high precision positioning is not necessary, the process advances to the step S116.

In the step S 112, the question of whether a bandwidth satisfying the required positioning precision can be secured or not is judged. If, as a result thereof, it is judged that the desired bandwidth can be secured, the frequency at which the bandwidth can be secured is selected (S 113). Then, the transmission method (the center frequency, bandwidth, modulation method and pulse repetition_frequency) is set at the selected bandwidth and frequency (S119), and the process advances to the step S107.

More specifically, if a high precision positioning with an error of 60 cm is required upon the demand of the application side of this wireless communication system, the process advances from the step S111 to the step S112. At the step S 112, the question of whether the bandwidth (1.0 GHz) necessary to obtain a positioning precision of 60cm can be secured or not is judged. As positioning precision and frequency band depend on the performance of the receiver and the positioning algorithm, as mentioned above, these relationships should be set in advance.

On the other hand, if it is judged that the necessary bandwidth cannot be secured in the step S112, the system waits for the prescribed time (e. g., one minute) until the necessary bandwidth (e. g., 1.0 GHz) can be secured. If the necessary bandwidth can be secured during that time, the process advances to the step S113. On the other hand, if the necessary bandwidth cannot be secured even after waiting for the prescribed time, the signal with the maximum bandwidth that can be transmitted within the band available for communication is selected (S115). At this time, upon the request from the application, the positioning precision may be improved by transmitting positioning signals several times. The standby time, bandwidth and number of transmissions should be set in advance. And parameters may be optimized by feeding back the results of actual positioning.

Then, the transmission method (the center frequency, bandwidth, modulation method and pulse repetition frequency) is set by the chosen bandwidth and frequency (S 119), and the process proceeds to the step S107.

Then, we will describe the step to be taken when it is determined that no high precision positioning is required in the step S111.

In the step S 116, the question of whether the current communication can be established by the same conditions as the previous communication band (center frequency and bandwidth) or not is determined (S116). As a result, if the bandwidth can be secured by the same conditions as the previous communication bandwidth, the same communication band as the previous one is chosen (S 117), and the transmission method is set by the chosen bandwidth and frequency (S 119) and the process proceeds to the step S107.

On the other hand, if the bandwidth cannot be secured by the same conditions as the previous communication band in the step S116, the communication band is chosen according to the demand of the application (S118). For example, the lowest center frequency may be chosen, or the widest bandwidth may be chosen and so forth.

We will then describe by what procedure the transmission modes described in (1) through (4) above are chosen with reference to the flowchart described in Fig. 11.
(1) In the case of transmission by the same condition as the previous transmission mode.
   When the process proceeds in the order of S111, S 116, S 117 and S 119, signals can be transmitted by the same conditions as the previous transmission mode. As this configuration eliminates the necessity of resetting the transmission conditions in the transmitter, and as the recipient's receiver receives signals by the same configuration as in the previous time, it is possible to receive signals in the optimum condition and to synchronize easily with the received signals. In addition, the power consumption of the wireless communication system is reduced.
(2) In the case of transmission by the lowest frequency band among the available bands.
   When the process proceeds in the order of S111, S116, S118, and S 119, it is possible to transmit signals by the lowest frequency band among the available bands. It is possible to limit the transmission loss in the space to the minimum and to improve the reliability of communication by communicating in the lowest frequency band. This enables to reduce the number of retransmission and the power consumption of the wireless communication system.
(3) In the case of transmission by the widest bandwidth band among the available bands.
   When the process proceeds in the order of S111, S 112, S 113, or S 119 or S111, S116, S118 and S119, it is possible to transmit signals in the widest bandwidth band among the available bands. Bandwidth and positioning precision are inversely proportional to each other, and bandwidth and transmission speed are proportional to each other. Therefore, it is possible to improve positioning precision and communication speed by transmitting signals in the widest bandwidth band.
(4) In the case of transmission in the narrowest bandwidth among the bands wherein the desired communication performance or positioning performance can be obtained.
   When the process proceeds in the order of S111, S116, S118, and S119, it is possible to transmit signals in the narrowest bandwidth among the bands in which the desired communication performance or positioning performance can be obtained. Since receiving power can be reduced so much more as bandwidth gets narrower, under the condition wherein the desired communication performance or positioning performance can be obtained, the narrower the bandwidth gets, the more desirable it becomes. And as the bandwidth occupied by this wireless communication system is narrow in this case, it can easily coexist with other wireless communication systems.

In view of this phenomenon, as the power consumption of the receiver decreases and the use efficiency of frequency improves, an improvement in the overall efficiency of the system can be expected. The relationship between these desired communication performance and positioning performance on one hand and the center frequency and bandwidth on the other hand should be set in advance by verifications based on simulation and actual measurements and the like. Or the relationship between the performances and the communication modes may be renewed by including the number of retransmissions and packet error ratio and other data constituting the indicator of communication performance in the packets during the operation of the system and by referring these data.

As described above, according to the first embodiment, it is possible to reduce the impacts of the UWB system on the other systems. And it is possible to reduce any deterioration in the performance of the UWB system due to the interference of other systems. In addition, it is possible to reduce power consumption and improve communication performance by controlling the receiving unit to the optimum condition.

We will then examine quantitatively the effect of reducing this interference amount. For example, let us assume the next generation portable phone system (the fourth generation mobile communication system) as another system to which the UWB system produces impacts. Although the specification of the fourth generation mobile communication system is uncertain, according to "Report (draft) of the UWB Radio System Committee" (issued by Japan Ministry of Internal Affaires and Communication), if 1000 or more UWB devices per km² are used, noise level exceeds the allowable reception level of mobile stations at the rate of 30%. Therefore, the application of this invention enables to reduce the interference of the UWB system with the fourth generation mobile communication systems. For example, the reduction of EIRP to -70 dBm/MHz alone results in a decrease in the probability of noise level exceeding the allowable value to 0.5% or less, and in a sharp diminution of the interference amount of UWB devices.

### (Second Embodiment)

Fig. 12 is a block diagram describing the configuration of the detecting unit of the wireless communication apparatus according to the second embodiment of this invention.

The detecting unit 100 comprises a local oscillator 201, a mixer 202, a low pass filter (LPF) 203, a variable gain amplifier 204 and a received signal strength indicator (RSSI) 205.

The receiving signals from the antenna 1050 are inputted into the mixer 202 through the low noise amplifier 1070. The mixer 202 can convert the received signals into low frequency signals by mixing the oscillation frequency of the oscillator 201 and the received signals. This enables to mitigate the specification of the circuits subsequent to the mixer 202.

The signals outputted from the mixer 202 are inputted into the low pass filter 203. The low pass filter 203 shuts off sharply the signals from the mixer 202 within the band. The signals having passed through the low pass filter 203 are amplified by the variable gain amplifier 204 to a desired level and are inputted the received signal strength indicator 205. The received signal strength indicator 205 is a circuit for outputting the voltage value of signals from the variable gain amplifier 204.

According to the second embodiment, the receiving frequency converted into power value changes by scanning the oscillation frequency of the oscillator 201 with the control signal 210 from the judging unit 110. The judging unit 110 can obtain the distribution of power received by the antenna 1050 as the function of frequency based on the receiving signal strength outputted by the received signal strength indicator 205 and the control signal 210. As the establishment of the oscillator 201 independently from the detecting unit 100 results in the independent specification of the detecting unit 100 from that of the oscillator of the receiving unit 130, the circuit scale expands but the difficulty of designing can be remarkably reduced.

With regard to the oscillator 201 and the mixer 202 according to the second embodiment, as shown in Fig. 3, the area of their implementation and power consumption can be reduced by sharing the configuration of the receiving unit 130 (oscillator 1071 and mixer 1072).

### (Third Embodiment)

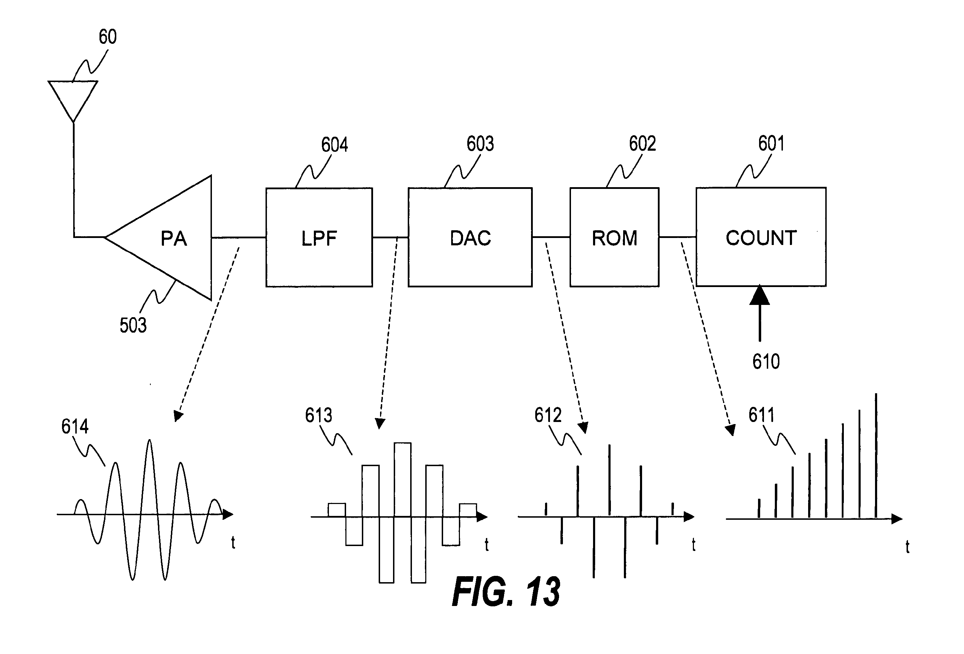

Fig. 13 is a block diagram describing the configuration of the transmitting unit 120 of a wireless communication apparatus according to the third embodiment of this invention. The transmitting unit according to the third embodiment adopts the direct digital synthesizer (DDS) system.

The transmitting unit 120 according to the third embodiment includes a counter (COUNT) 601, a storage unit (ROM) 602, a digital to analog converter (DAC) 603, a low pass filter (LPF) 604 and a power amplifier (PA) 503.

The direct digital synthesizer generates waveforms by digital discrete values and generates analog waveforms by the digital to analog converter and filtering. Therefore, the direct digital synthesizer can generate highly free waveforms.

We will describe below the operating principle of the direct digital synthesizer. Upon the input of a clock signal 610, the counter 601 counts the inputted clock signal 610 from 0 to N and generates a stepped digital waveform 611. Each of the count values of the counter is inputted into the storage unit 602. The storage unit 602 outputs data corresponding to each count value inputted. The data stored in the storage unit 602 are data showing the output form by discrete values in advance. Therefore, the signals 612 outputted from the storage unit 602 have discrete input waveforms.

The digital/analog converter 603 converts the signals 612 outputted from the storage unit 602 into analog waveforms 613 and input the same into the low pass filter 604. The low pass filter 604 removes unnecessary higher harmonic component from the inputted analog waveforms 613. Then, the analog waveforms 614 from which the higher harmonic component has been removed are amplified to a desired level by the power amplifier 503 and are irradiated from the antenna 60.

As described above, unlike the transmitting unit (Fig. 4) according to the first embodiment in which an analog system is adopted, the transmitting unit according to the third embodiment generates waveforms by digital control and accordingly can generate high precision and high freedom pulses. For example, the center frequency, pulse waveform, bandwidth and the like can be flexibly changed by changing the clock 610 and the data of the digital waveforms stored in the storage device 602.

### (Fourth embodiment)

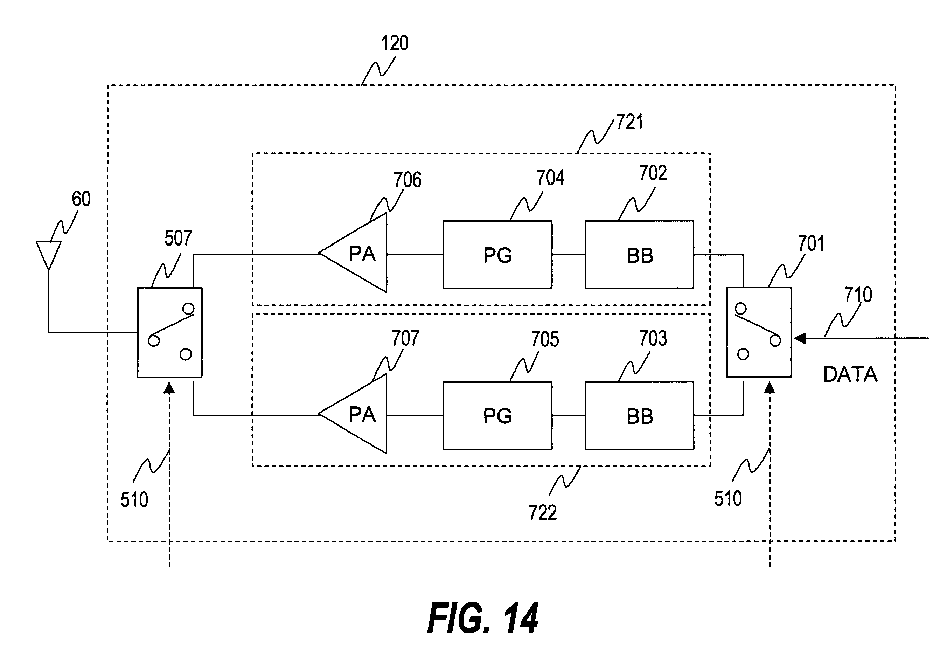

Fig. 14 is a block diagram describing the configuration of the transmitting unit 120 of the wireless communication apparatus according to the fourth embodiment of this invention.

The transmitting unit 120 according to the fourth embodiment includes a switch 701, pulse generators 721 and 722 and a switch 507. The pulse generators 721 and 722 include respectively a base band unit (BB) 702 and 703, a radio frequency pulse generator (PG) 704 and 705 and a power amplifier 706 and 707.

The radio frequency pulse generators 721 and 722 generate the preset frequency, bandwidth and pulse forms.

The transmitting unit 120 selects the pulse to be generated and the UWB signals to be transmitted by selecting the radio frequency pulse generators 721 and 722.

The switches 701 and 507 are switched synchronously by the control signals 510 outputted by the judging unit 110 to select the radio frequency pulse generators 721 or 722 that generate the transmission signals.

The transmission data 710 are inputted into the radio frequency pulse generators 721 or 722 selected by the switch 701. The selected radio frequency pulse generators 721 and 722 output specific pulses respectively set in advance.

The transmitting unit according to the fourth embodiment described above has a specific effect of being easy to implement. For example, when this configuration is designed by a 0.18 mm CMOS process, it is possible to implement the unit with a circuit area of approximately 2 mm X 2 mm per radio frequency pulse generator 721. Therefore, the provision of a plurality of radio frequency pulse generators to generate the desired bandwidth and pulse form does not constitute a major obstacle from the viewpoint of implementation.

### (Fifth Embodiment)

Then the communication system according to the fifth embodiment of this invention will be described.

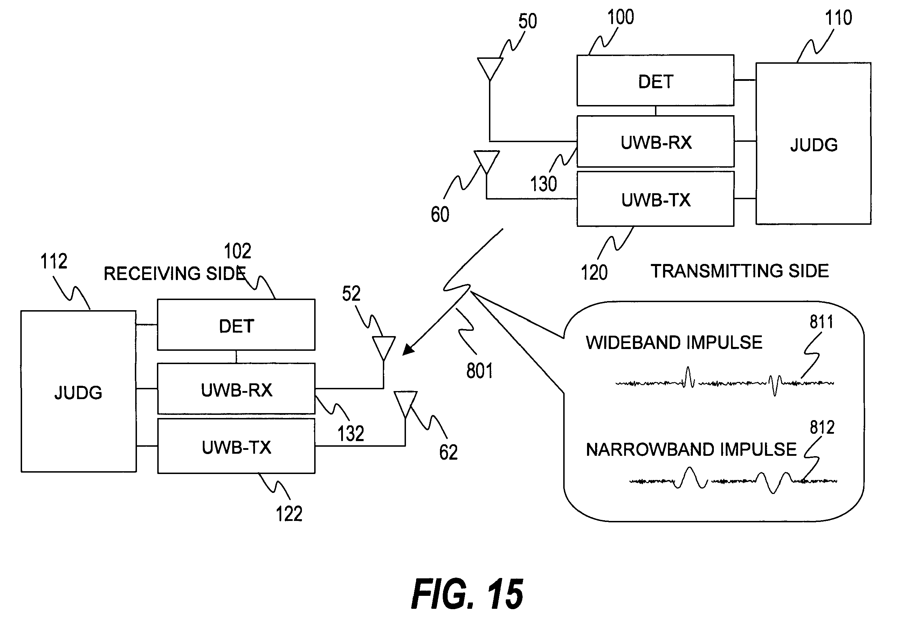

Fig. 15 is a block diagram describing the configuration of the communication system according to the fifth embodiment of this invention. The communication system according to the fifth embodiment includes a plurality of wireless communication apparatuses according to the first embodiment. Incidentally, Fig. 15 illustrates only two wireless communication apparatuses and shows the case of communicating with two wireless communication apparatuses.

To begin with, we will describe the background behind the characteristics of the fifth embodiment. Depending on the pulse width of the transmission signals 801, the optimum configuration of the receiving unit 132 of the wireless communication apparatus on the receiving side differs. In other words, for receiving narrow band signals on the time axis (broad band on the frequency axis) 811, the front-end analog receiving circuit (e. g., low noise amplifier) must be able to receive signals in a broad band. For receiving signals in a broad band, the radio frequency specification is severe and much current must be let to flow in comparison with the case of receiving signals in a narrow band.

Furthermore, the reception of broad band signals involves a demerit in that gain, noise indicators and other elements of amplifier performance deteriorate. And when digital signal processing is taken into account, digital conversion at a high speed sampling speed (e. g., 1 Gsps) will be required for capturing narrow band signals on the time axis. Similarly, high speed signal processing will also be required. As a result, in a broad band system, the power consumption of the receiving unit will be greater than that of a narrow band system.

On the other hand, due to the possibility of increasing the transmission power under the present legal regulation, the use of broad band signals improves the state of communication. In addition, since the pulse is narrow on the time axis, theoretically high precision positioning and measurement of distance are possible. On the contrary, in a narrow band (broad band on the time axis) system, interferences with other systems can be easily avoided, and the specifications relating to the performance of receivers are more mitigated.

The wireless communication apparatus on the transmitting side include a receiving antenna 50, a transmitting antenna 60, a detecting unit 100, a judging unit 110, a transmitting unit 120 and a receiving unit 130. The wireless communication apparatus on the receiving side includes a receiving antenna 52, a transmitting antenna 62, a detecting unit 102, a judging unit 112, a transmitting unit 122 and a receiving unit 132. The wireless communication apparatus on the receiving side has the same configuration of the same name as that of the wireless communication apparatus on the transmitting side.

The wireless communication apparatus on the transmitting side transmits UWB signals 801 from the antenna 60. Regarding the waveform of the UWB signals 801, the pulse width on the time axis changes as shown by 811 and 812 by the bandwidth of the UWB signal 801.

The fifth embodiment is characterized by the configuration of the receiver 132 on the receiving side and its control algorithm.

According to the fifth embodiment, the wireless communication apparatus on the receiving side judges the characteristics of the received signals in order to optimize the characteristics of the receiving unit 132 in response to the received signals. Accordingly, (1) the wireless communication apparatus on the transmitting side includes the data relating to the transmission method of packets (bandwidth, pulse waveform and the like) in the signals to be transmitted[i3]. (2) The wireless communication apparatus on the transmitting side includes the data relating to the communication state of packets (number of retransmissions, bit error rate and the like) in the signals to be transmitted[i4]. (3) The transmission method of the signal (bandwidth and the like) is detected by sampling the preamble of the transmission packet at a high speed. (4) The power of transmission signal is detected in any freely chosen band to judge the band of the transmission signal. (5) If this system uses known channels, the transmission band is judged by detecting the level of signals in the band specified by the standard (e. g., the IEEE standard). By such means, the characteristics of the received signals can be judged. The judgment method of received signals described above is prescribed in advance.

The signals outputted from the transmitting unit 120 to which the fifth embodiment applies are transmitted in a variety of bandwidths due to the requirement of the system and the restriction of bandwidth for the purpose of reducing interferences. Based on the information judged by the judging unit 112, the receiving unit 132 can optimize the characteristics of the receiving unit 132. Therefore, the power consumption of the receiving unit 132 can be reduced and the performance of the wireless communication apparatus can be improved.

We will describe below quantitatively the effect by the fifth embodiment. For example, when it is possible to foresee that signals in the 500 MHz band will be received from a receiving system in the 1.5 GHz band, the 3 bit analog digital converter that operated at a sampling rate of 1.5 GHz can be reduced to a sampling rate of 500 MHz. This reduction of sampling rate can lead to a sharp reduction of power consumption from 200mW to 20mW. And the signal processing speed of the base band can also be reduced.

The optimization of the receiving system in response to the input signals is important from the viewpoint of reducing power consumption. In particular, in the case of nodes of a sensor net system and the like driven by a button cell, the effect of reducing power consumption is important.

On the contrary, when it has become possible to use a band of 1.5GHz from a system of 500MHz band, improvements in communication performance can be expected as exemplified by an increase of 1.8 times in the communication distance. This is due to the fact that in the UWB system output power is specified as an output power per unit frequency band, and that a three times increase in the bandwidth results simply in a three times increase in the allowable output power. As a result, the power of received signals increases.

Incidentally, even if the receiving unit 132 stands by with any characteristic not corresponding to the receiving waveform, as far as the center frequency is the same, the fact that the bandwidth of the pulse signal received is wide or narrow may result in the deterioration of receiving performance as described above, but it is possible to communicate. However, this may cause some operationally undesirable consequences such as an improvement in error rate of communication due to deteriorations in reception performance, a remarkable deterioration in system efficiency and the like.

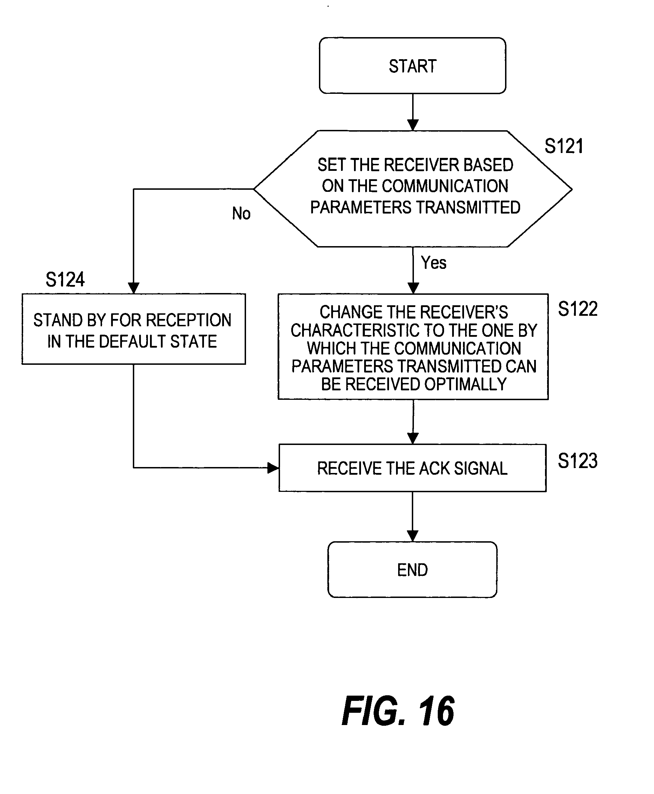

Fig. 16 is a flowchart showing an operation of the communication system according to the fifth embodiment.

As described above, from the viewpoint of system performance, the optimization of the receiving unit corresponding to the pulse waveform is important, and we will show another mode of carrying out among its application plans.

The process shown in Fig. 16 is a process that may be carried out as necessary after the end of the transmission process of the first embodiment (S107 in Fig. 6). For example, the process of receiving the signal (ACK signal) acknowledging the acquisition of data by the wireless communication apparatus on the receiving side after the wireless communication apparatus on the transmitting side had transmitted data.

According to the fifth embodiment, the receiving unit 130 includes a means for changing the characteristics so that the signals transmitted may be received more efficiently. After the end of the transmission process (S107 in Fig. 6), the judging unit 110 judges whether the characteristics of the receiving unit 130 should be changed or not so that the transmitted signals may be received more efficiently.

As a result, when it is judged that the characteristics of the receiving unit 130 should be changed, the characteristics of the receiving unit 130 are changed based on the transmitted signals (in other words, the information provided by the judging unit 110) (S122). Then, the receiving unit 130 stands by in that state for ACK signals, and when an ACK signal has been received, the received signal is demodulated (S123).

On the other hand, when it is judged that the characteristics of the receiving unit 130 will not be changed, the receiving unit 130 maintains the characteristics of the initial state (S124).

Upon receiving an ACK signal, the wireless communication apparatus on the transmitting side will be in the standby mode. On the other hand, if the wireless communication apparatus on the transmitting side receives no ACK signal within the prescribed time, it retransmits the data transmitted last time and proceeds to other steps. These steps taken after receiving the ACK signals depends on the system specification.

As the ACK signals and other signals to be transmitted (receiving signals) are highly likely to have the same bandwidth as that of the signals transmitted by the wireless communication apparatus on the transmitting side, signals can be received in the optimum manner by adjusting in advance the characteristics of the receiving unit 130 of the wireless communication apparatus on the transmitting side so that the signals transmitted by the wireless communication apparatus on the transmitting side can be received in the optimum manner in the band of transmission signals when the wireless communication apparatus on the transmitting side transmitted the signals.

And the example described above presupposes the system in which the ACK signals are exchanged. However, when the reception of any signal can be expected after the wireless communication apparatus has transmitted signals independently from the ACK signals, the characteristics of the receiving unit 130 can be adjusted optimally by proceeding to a similar process.

We will then describe a variation of the fifth embodiment.

This variation is a process mainly applied to the base station, which we will describe with reference to Fig. 15 described above. In this variation, the wireless communication apparatus on the transmitting side is taken as a sensor net node, and the wireless communication apparatus on the receiving side is taken as the base station.

The sensor node is a wireless communication terminal provided with sensors (e. g., temperature sensor and/or humidity sensor and the like) and transmits the information on temperature and/or humidity measured by the sensors. The base station, which receives information from a plurality of sensor nodes located at different places, is mainly on the standby to receive data.

The radio signals 801 arriving at the receiving antenna 62 are detected by the detecting unit 102. And when the bands 20 (see Fig. 1) that should be avoided to reduce interferences to other systems are identified, the characteristics of the receiving unit 132 are changed so that the bands may be avoided, and the base station[i5] stands by for signals from the sensor nodes. This presupposes that the base station and the sensor net nodes detect the same other systems. By this, the base station [i6]forecasts the signal waveforms transmitted by the nodes before detecting the signals transmitted by the sensor nodes.

And this variation is effective even if the interference signals of other systems detected by the base station and the sensor net nodes are different. For example, when this wireless communication system is communicating in the 3.4 GHz to 4.8 GHz band (bandwidth 1.4 GHz), if a mobile telephone terminal transmitting a signal with a several hundred milliwatt output is present within the communication bandwidth, the front-end low noise amplifier (LNA) can be saturated, and the communication by this wireless communication system becomes almost impossible. However, according to this variation, as the base station stands by while avoiding the band used by the mobile telephone terminal, the communication quality of this wireless communication system can be secured.

In order to enable this variation function effectively, for example the base station may be provided with a plurality of band pass filters and/or band removing filters. When signals constituting interference waves with this wireless communication system are detected, the base station can reduce the deterioration of communication performance by the interferences given by other system by using these filters.

Incidentally, it is preferable that the algorithm designed to be put to work when the signals that should be avoided have been detected be implemented in advance in the sensor nodes and the base station. For example, when the wireless communication system whose interference should be avoided has been detected in the band in which transmission is planned, signals should be transmitted on the low frequency side. This is because low frequency signals have a small propagation loss. And signals may be transmitted in a frequency band where as many transmission bandwidths as possible can be secured. And signals may be transmitted in the 7.25 GHz to 10.25 GHz band in which no interference mitigation algorithm is required by the regulatory texts. In this way, it is preferable that the band selecting method and/or prioritization and the like corresponding to the system be implemented.

As described above, according to the fifth embodiment, it is possible to reduce the interferences given by other systems and to prevent the deterioration of system performance and the disruption of communication.

This invention can be applied to the UWB wireless communication systems, and in particular profitably to sensor network and other telemetry systems and data radio transmission systems as well as positioning systems.

While the present invention has been described in detail and pictorially in the accompanying drawings, the present invention is not limited to such detail but covers various obvious modifications and equivalent arrangements, which fall within the purview of the appended claims.

## Claims

1. A wireless communication apparatus for communicating by a single channel using ultra wide band impulse signals, being configured to:
detect the signal transmitted by other wireless systems in a frequency band where the signal can be transmitted;
determine a transmission band avoiding the band in which the signal has been detected; and
control the bandwidth of the channel so that the transmission signals may be included in the determined transmission band.

2. The wireless communication apparatus according to claim 1, further configured to:
judge whether a predetermined required precision can be satisfied in the bandwidth of the controlled channel; and
perform, in case the bandwidth can not satisfy the required precision, positioning several times.

3. The wireless communication apparatus according to claim 1, further configured to:
judge whether it is possible to transmit signals in the same band as the band of the signal transmitted previously from the wireless communication apparatus; and
control, in case the signals cannot be transmitted in the same band as the previous band, the bandwidth of the channel to meet the required specification by selecting the lowest center frequency or the widest bandwidth.

4. A wireless communication apparatus for communicating by a single channel using ultra wide band impulse signals, comprising:
a detecting unit for detecting signals transmitted by other wireless systems in a frequency band where the signal can be transmitted;
a judgment unit for judging the method of transmitting signals based on the frequency band in which the signal was detected; and
a transmitting unit for creating ultra wide band impulse signals with a restricted band by the transmission method judged by the judgment unit,
wherein the wireless communication apparatus transmits signals by the channel of the restricted bandwidth to avoid interferences with the other wireless systems.

5. The wireless communication apparatus according to claim 4, further comprising a receiving unit for receiving ultra wide band impulse signals, and for controlling the characteristics of receiving the signals being received based on the received signals.

6. The wireless communication apparatus according to claim 4, further comprising a receiving unit for controlling the characteristics of receiving ultra wide band impulse signals based on the signals transmitted from the transmitting unit.

7. The wireless communication apparatus according to claim 6,
wherein the signals transmitted by the transmitting unit include data indicating the communication status between the wireless communication apparatus on the transmitting side and the wireless communication apparatus on the receiving side.

8. The wireless communication apparatus according to claim 4, further comprising:
a first receiving unit for receiving ultra wide band impulse signals; and
a second receiving unit for controlling the characteristics of receiving ultra wide band impulse signals based on the signals detected by at least one of the detecting unit and the first receiving unit, before receiving the signals by the first receiving unit.

9. The wireless communication apparatus according to claim 4, further comprising a storage unit for storing an algorithm for judging the transmission method when another wireless system with which the interference should be avoided is detected,
wherein the wireless communication apparatus on the transmitting side and the wireless communication apparatus on the receiving side judge the transmission method by using the same algorithm stored in the storage units, when the another wireless system with which the interference should be avoided is detected.

10. The wireless communication apparatus according to claim 4,
wherein the judging unit judges the transmitting method based on at least one of the required communication performance, positioning performance, the performance of the wireless communication apparatus on the transmitting side and the receiving side, the type of transmission packet and the contents of data to be transmitted.

11. A wireless communication system comprising a plurality of wireless communication apparatuses for communicating by a single channel using ultra wide band impulse signals,
wherein each of the wireless communication apparatuses:
detects the signals transmitted by other wireless systems in the frequency band where the signal can be transmitted ;
determines a transmission band avoiding the band in which the signals were detected; and
controls the bandwidth of the channel so that the transmitted signals may be included in the determined transmission band.

12. The wireless communication system according to claim 11,
wherein each of the wireless communication apparatuses receives ultra wide band impulse signals; and control the characteristics of receiving the signals being received based on the received signals.

13. The wireless communication system according to claim 11,
wherein each of the wireless communication apparatuses controls the characteristics of receiving ultra wide band impulse signals based on the signals transmitted from the wireless communication apparatus.

14. The wireless communication system according to claim 13,
wherein the signals transmitted from the wireless communication apparatus include data indicating the communication status between the wireless communication apparatus on the transmitting side and the wireless communication apparatus on the receiving side.

15. The wireless communication system according to claim 11,
wherein each of the wireless communication apparatuses receives ultra wide band impulse signals; and controls the characteristics of receiving ultra wide band impulse signals based on the signals detected before receiving the signals by the first receiving unit.

16. The wireless communication system according to claim 11,
wherein each of the wireless communication apparatuses stores an algorithm for controlling the bandwidth of the channel when other wireless systems with which the interference should be avoided are detected, and
wherein the wireless communication apparatus on the transmitting side and the wireless communication apparatus on the receiving side control the bandwidth of the channel by using the same stored algorithm when another wireless system with which the interference should be avoided is detected.

17. The wireless communication system according to claim 11,
wherein each of the wireless communication apparatus controls the bandwidth of the channel based on at least one of the required communication performance, positioning performance, the performance of the wireless communication apparatus on the transmitting side and the receiving side, the type of transmission packet and the contents of data to be transmitted.
